# EUROPEAN PATENT SPECIFICATION

(11) **EP 4 249 288 B1**
(45) Date of publication and mention of the grant of the patent: **18.06.2025**
(21) Application number: 23163028.6
(22) Date of filing: 21.03.2023
(51) Int. Cl.: B60C 9/08, B60C 13/00, B60C 13/02, B60C 15/024

(54) **HEAVY DUTY TIRE AND PRODUCTION METHOD FOR HEAVY DUTY TIRE**
SCHWERLASTREIFEN UND HERSTELLUNGSVERFAHREN FÜR SCHWERLASTREIFEN
PNEU POUR POIDS LOURDS ET PROCÉDÉ DE PRODUCTION DE PNEU POUR POIDS LOURDS

(30) Priority: 23.03.2022 JP 2022046584
(43) Date of publication of application: 27.09.2023
(73) Proprietor: Sumitomo Rubber Industries, Ltd., Kobe-shi, Hyogo-ken 651-0072 (JP)
(72) Inventor: KITANO, Tetsuya, Kobe-shi 651-0072 (JP)
(74) Representative: Manitz Finsterwald Patent- und Rechtsanwaltspartnerschaft mbB

(56) References cited:
- EP-A1- 2 505 388
- WO-A1-2020/012121
- JP-A- 2007 230 515
- JP-A- H10 166 809
- US-A- 4 408 648

## Description

### BACKGROUND OF THE INVENTION

### Field of the Invention

The present invention relates to a heavy duty tire and a production method for a heavy duty tire.

### Background Art

From the viewpoint of consideration for the environment, improvement of fuel economy is required for vehicles. Reduction of rolling resistance is required for tires. Therefore, reduction of the masses of tires is considered (for example WO 2013/111576 A1).

To reduce mass, for example, recesses are provided on the side surfaces of a tire. In a meridian cross-section of the tire, each side surface has an outwardly curved shape, but each recess has an inwardly curved shape. By providing the recess on each side surface, surface strain is increased as compared to that of a conventional side surface having no recess. The increase in surface distortion promotes occurrence of superficial cracking (SFC).

Each side surface of the tire is formed by a crosslinked product of a rubber composition. The rubber composition contains ingredients such as an antioxidant. By adjusting the configuration of the rubber composition such as increasing the amount of the antioxidant, SFC resistance can be improved. However, in this case, the material cost may be increased.

It is desired to establish a technology capable of improving SFC resistance, while achieving mass reduction, without adjusting the configuration of the rubber composition.

EP 2 505 388 A1 discloses a heavy duty tire according to the preamble of claim 1. Other related tires are disclosed in WO 2020/012121 A1, US 4,408,648 A, JP H10-166809 A, and JP 2007-230515 A.

The present invention has been made in view of such circumstances. An object of the present invention is to provide a heavy duty tire and a production method for a heavy duty tire that can achieve improvement of SFC resistance while achieving mass reduction.

### SUMMARY OF THE INVENTION

A heavy duty tire according to an aspect of the present invention includes a pair of beads and a carcass extending on and between a first bead and a second bead out of the pair of beads. The bead includes a core and an apex located radially outward of the core and including an inner apex and an outer apex. The carcass includes a carcass ply. The carcass ply includes a large number of carcass cords aligned with each other. Each of the carcass cords is a steel cord. In a meridian cross-section of the tire, a contour of the carcass includes an outwardly bulging curved portion and an inwardly recessed inversely curved portion located radially inward of the curved portion. The inversely curved portion is connected to the curved portion. A boundary between the curved portion and the inversely curved portion is an inflection point. A part or an entirety of the curved portion is represented by a first arc including the inflection point. A part or an entirety of the inversely curved portion is represented by a second arc including the inflection point. The first arc and the second arc are tangent to each other at the inflection point. Each side surface of the tire includes a recess recessed inwardly, an outer portion located radially outward of the recess, and an inner portion located radially inward of the recess. The recess is located radially outward of the inflection point. A ratio of a thickness of the inner apex to a thickness of the apex at the inflection point is not less than 30 % and not greater than 45 %.

Preferably, in the heavy duty tire, a ratio of a distance in an axial direction from an equator plane of the tire to the inflection point to a distance in the axial direction from the equator plane to an axially outer end of the contour of the carcass is not less than 70% and not greater than 85%, and a ratio of a distance in a radial direction from a bead base line of the tire to the inflection point to a distance in the radial direction from the bead base line to a point of intersection of the contour of the carcass and the equator plane is not less than 15% and not greater than 22%.

Preferably, in the heavy duty tire, a ratio of a distance in the radial direction from the bead base line of the tire to a bottom of the recess to a distance in the radial direction from the bead base line to the inflection point is not less than 1.8.

Preferably, in the heavy duty tire, a ratio of the distance in the radial direction from the bead base line of the tire to the bottom of the recess to a distance in the radial direction from the bead base line to the axially outer end of the contour of the carcass is not greater than 0.9.

Preferably, in the heavy duty tire, the recess includes a bottom portion including the bottom, an outer boundary portion located radially outward of the bottom portion and including an outer end of the recess, and an inner boundary portion located radially inward of the bottom portion and including an inner end of the recess. In the meridian cross-section of the tire, a contour of the outer boundary portion is represented by an arc that is tangent to a line representing a contour of the outer portion, at the outer end of the recess, and that has a radius of not less than 40 mm, or a contour of the inner boundary portion is represented by an arc that is tangent to a line representing a contour of the inner portion, at the inner end of the recess, and that has a radius of not less than 40 mm.

Preferably, in the heavy duty tire, in the meridian cross-section of the tire, the contour of the outer boundary portion is represented by an arc that is tangent to the line representing the contour of the outer portion, at the outer end of the recess, and that has a radius of not less than 40 mm. The contour of the inner boundary portion is represented by an arc that is tangent to the line representing the contour of the inner portion, at the inner end of the recess, and that has a radius of not less than 40 mm.

Preferably, in the heavy duty tire, a contour of the bottom portion is represented by an arc that is tangent to the arc representing the outer boundary portion, at an outer end of the bottom portion, and that is tangent to the arc representing the inner boundary portion, at an inner end of the bottom portion.

Preferably, in the heavy duty tire, a ratio of a minimum thickness from the carcass to the recess to a virtual thickness, from the carcass to a virtual side surface obtained on the assumption that the recess is not present, measured along a line segment indicating the minimum thickness, is not less than 30% and not greater than 70%.

Preferably, in the heavy duty tire, the core includes a core body. The core body includes a wire wound in a circumferential direction. The core body has a bottom surface located so as to face a seat of a rim onto which the tire is fitted. In the meridian cross-section of the tire, a contour of the bottom surface is represented by a straight line, and an angle formed between a tangent line that is tangent to the contour of the carcass at the inflection point and the straight line representing the contour of the bottom surface is not less than 25 degrees and not greater than 30 degrees.

Preferably, in the heavy duty tire, a ratio of a thickness of the apex to a thickness of the tire at the inflection point is not less than 42% and not greater than 50%.

Preferably, in the heavy duty tire, a movement distance of the inflection point when the tire is fitted on the rim and an internal pressure of the tire is changed from 50 kPa to a standardized internal pressure is not greater than 5 mm.

A production method for a heavy duty tire according to an aspect of the present invention is a method for producing a tire including a pair of beads and a carcass extending on and between a first bead and a second bead out of the pair of beads. The production method includes: a step of preparing a green tire that is in an unvulcanized state of the tire; and a step of pressurizing and heating the green tire in a mold. A ratio of a clip width of the mold to a rim width of a rim onto which the tire is fitted is not less than 1.02 and not greater than 1.17.

According to the present invention, a heavy duty tire that can achieve improvement of SFC resistance while achieving mass reduction is obtained.

### BRIEF DESCRIPTION OF THE DRAWINGS

FIG. 1 is a cross-sectional view showing a part of a heavy duty tire according to an embodiment of the present invention;
FIG. 2 is a cross-sectional view showing a contour of a carcass;
FIG. 3 is a cross-sectional view illustrating specification of the contour of the carcass;
FIG. 4 is a cross-sectional view illustrating specification of a contour of another carcass;
FIG. 5 is a cross-sectional view showing a contour of the carcass and a contour of a bead portion;
FIG. 6 is a cross-sectional view of the bead portion;
FIG. 7 is a cross-sectional view illustrating movement of an inflection point; and
FIG. 8 is a cross-sectional view illustrating a production method for the heavy duty tire.

### DETAILED DESCRIPTION

Hereinafter, the present invention will be described in detail based on preferred embodiments with appropriate reference to the drawings.

In the present disclosure, a state where a tire is fitted on a standardized rim, the internal pressure of the tire is adjusted to a standardized internal pressure, and no load is applied to the tire is referred to as a standardized state.

A state where the tire is fitted on the standardized rim, the internal pressure of the tire is adjusted to 50 kPa, and no load is applied to the tire is referred to as a reference state.

In the present disclosure, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cross-section of the tire obtained by cutting the tire along a plane including a rotation axis, with the distance between right and left beads being made equal to the distance between the beads in the tire that is fitted on the standardized rim.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present disclosure, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

In the present disclosure, of the components included in the tire, the hardness of each component formed from a crosslinked rubber is measured according to the standards of JIS K6253 under a temperature condition of 23°C using a type A durometer.

In the present disclosure, the number of cords included per 5 cm width of a tire component, including aligned cords, is represented as the density of cords included in this component (unit: ends/5 cm). Unless otherwise specified, the density of the cords is obtained in a cross-section of the component obtained by cutting the component along a plane perpendicular to the longitudinal direction of the cords.

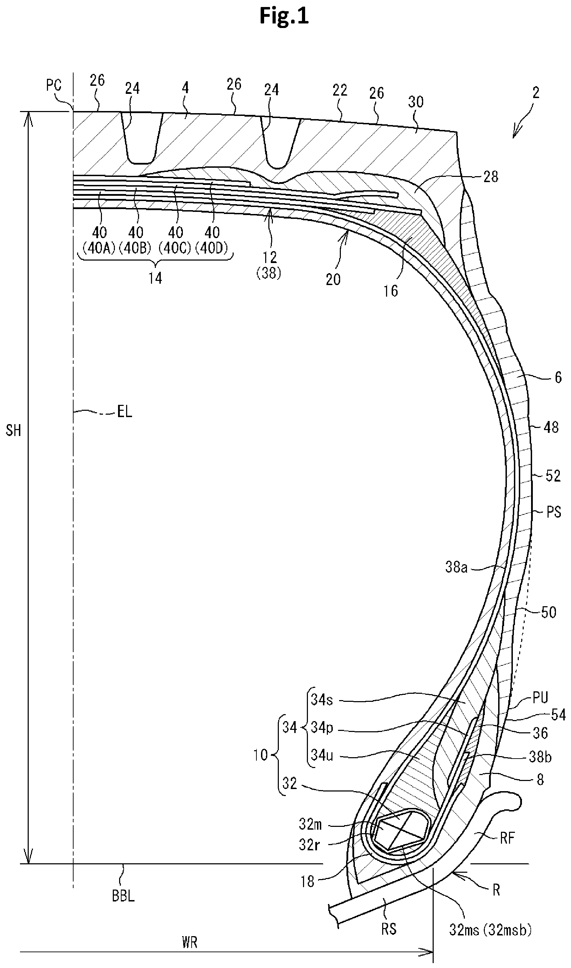

FIG. 1 shows a part of a heavy duty tire 2 (hereinafter, also referred to simply as "tire 2") according to an embodiment of the present invention. The tire 2 is mounted to a vehicle such as a truck and a bus.

FIG. 1 shows a part of a cross-section (hereinafter, meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line EL represents the equator plane of the tire 2.

The tire 2 is fitted onto a rim R. The rim R is a standardized rim. The interior of the tire 2 is filled with air to adjust the internal pressure of the tire 2. The tire 2 fitted on the rim R is also referred to as a tire-rim assembly. The tire-rim assembly includes the rim R and the tire 2 fitted on the rim R.

The rim R includes a seat RS and a flange RF. When the tire 2 is fitted onto the rim R, the seat RS comes into contact with a bead portion from the radially inner side, and the flange RF comes into contact with the bead portion from the axially outer side.

In FIG. 1, a solid line BBL extending in the axial direction is a bead base line. This bead base line BBL is a line that defines the rim diameter (see JATMA or the like) of the rim R. In FIG. 1, a length indicated by reference character WR is the rim width (see JATMA or the like) of the rim R.

The tire 2 includes a tread 4, a pair of sidewalls 6, a pair of chafers 8, a pair of beads 10, a carcass 12, a belt 14, a pair of cushion layers 16, a pair of steel fillers 18, and an inner liner 20.

The tread 4 comes into contact with a road surface at a tread surface 22 thereof. On the tread 4, at least three circumferential grooves 24 are formed.

On the tread 4 of the tire 2, four circumferential grooves 24 are formed. Accordingly, five land portions 26 are formed in the tread 4. These land portions 26 are aligned in the axial direction.

The tread 4 includes a base portion 28 and a cap portion 30. In the tread 4 of the tire 2, a pair of base portions 28 are provided. These base portions 28 are disposed with the equator plane EL therebetween. Each base portion 28 covers a portion at an end of the belt 14. The base portion 28 is formed from a crosslinked rubber that has low heat generation properties. The cap portion 30 is located radially outward of the base portion 28. The cap portion 30 includes the tread surface 22. The cap portion 30 is formed from a crosslinked rubber for which wear resistance and grip performance are taken into consideration.

In FIG. 1, reference character PC indicates the point of intersection of the tread surface 22 and the equator plane EL. The point of intersection PC corresponds to the equator of the tire 2. The equator PC is a radially outer end of the tire 2.

In FIG. 1, a length indicated by reference character SH is the distance in the radial direction from the bead base line BBL to the equator PC of the tire 2. The distance SH in the radial direction is the cross-sectional height (see JATMA or the like) of the tire 2.

Each sidewall 6 is connected to an end of the tread 4. The sidewall 6 extends radially inward from the end of the tread 4. The sidewall 6 is located radially inward of the tread 4. The sidewall 6 is formed from a crosslinked rubber for which cut resistance is taken into consideration.

Each chafer 8 is located radially inward of the sidewall 6. The chafer 8 comes into contact with the rim R. The chafer 8 is formed from a crosslinked rubber for which wear resistance is taken into consideration.

Each bead 10 is located axially inward of the chafer 8. The bead 10 is located radially inward of the sidewall 6. The bead 10 includes a core 32 and an apex 34. The core 32 extends in the circumferential direction. The apex 34 is located radially outward of the core 32. The apex 34 has a tapered shape.

The core 32 includes a core body 32m and a wrapping layer 32r.

The core body 32m is a ring extending in the circumferential direction. Although not shown, the core body 32m includes a wire made of steel and wound in the circumferential direction. A cross-sectional shape of the core body 32m is shaped by winding the wire in a regular manner. Accordingly, in a cross-section of the core body 32m, cross-sectional units each including a plurality of wire cross-sections aligned substantially in the axial direction are stacked in a plurality of stages substantially in the radial direction. The cross-sectional shape of the core body 32m is represented by a line that circumscribes the core body 32m. As shown in FIG. 1, the core body 32m has a hexagonal cross-sectional shape. The core body 32m may have a quadrangular cross-sectional shape.

The core body 32m generally has six side surfaces 32ms. As shown in FIG. 1, one side surface 32msb out of the six side surfaces 32ms is located so as to face the seat RS of the rim R. In the present disclosure, the side surface 32msb which is located so as to face the seat RS of the rim R is a bottom surface of the core body 32m. The core body 32m has the bottom surface 32msb which is located so as to face the seat RS of the rim R. In the meridian cross-section of the tire 2, the contour of the bottom surface 32msb is represented by a straight line.

The wrapping layer 32r surrounds the core body 32m. The wrapping layer 32r covers the core body 32m. The wrapping layer 32r prevents the core body 32m from falling apart.

The configuration of the wrapping layer 32r is not particularly limited as long as the wrapping layer 32r can prevent the core body 32m from falling apart. The wrapping layer 32r is composed of a cord helically wound around the core body 32m, a rubberized fabric wrapped around the core body 32m, or the like.

The apex 34 includes an inner apex 34u and an outer apex 34s.

The inner apex 34u extends radially outward from the core 32. The inner apex 34u is tapered outward in the radial direction. An outer end of the inner apex 34u is located at the inner surface of the apex 34. An outer end of the inner apex 34u is located radially inward of an outer end of the apex 34. The inner apex 34u is formed from a hard crosslinked rubber. Specifically, the hardness of the inner apex 34u is not less than 83 and not greater than 98.

The outer apex 34s is located radially outward of the inner apex 34u. The outer apex 34s is thick around the outer end of the inner apex 34u, and from this outer end portion, the outer apex 34s is tapered inward in the radial direction and is tapered outward in the radial direction. An inner end of the outer apex 34s is located at the outer surface of the apex 34. The inner end of the outer apex 34s is located near the core 32. An outer end of the outer apex 34s is located radially outward of the outer end of the inner apex 34u. The outer end of the outer apex 34s is the outer end of the apex 34. The outer apex 34s is formed from a crosslinked rubber that is more flexible than the inner apex 34u. Specifically, the hardness of the outer apex 34s is not less than 45 and not greater than 65.

The apex 34 of the tire 2 can further include a ply edge strip 34p. The ply edge strip 34p has a sheet shape and is stacked on the outer apex 34s. The ply edge strip 34p forms a part of the outer surface of the apex 34. As shown in FIG. 1, an end of a turned-up portion of a carcass ply described later is stacked on the ply edge strip 34p. The ply edge strip 34p is formed from a crosslinked rubber that is harder than the outer apex 34s.

The carcass 12 is located inward of the tread 4, the pair of sidewalls 6, and the pair of chafers 8. The carcass 12 extends on and between a first bead 10 and a second bead 10 out of the pair of beads 10.

The carcass 12 includes at least one carcass ply 38. The carcass 12 of the tire 2 is composed of one carcass ply 38. The carcass ply 38 is turned up around each core 32 from the inner side toward the outer side in the axial direction. The carcass ply 38 has a ply body 38a which extends between a first core 32 and a second core 32, and a pair of turned-up portions 38b which are connected to the ply body 38a and turned up around the respective cores 32 from the inner side toward the outer side in the axial direction.

The carcass ply 38 includes a large number of carcass cords aligned with each other. These carcass cords are covered with a topping rubber. Each carcass cord intersects the equator plane EL. In the tire 2, an angle of each carcass cord with respect to the equator plane EL (hereinafter, intersection angle of the carcass cord) is not less than 70° and not greater than 90°. The carcass 12 has a radial structure. The carcass cords of the tire 2 are steel cords.

In the tire 2, an intermediate strip 36 is provided between the ply edge strip 34p and the chafer 8. As shown in FIG. 1, the intermediate strip 36 covers an end of the turned-up portion 38b from the axially outer side. The intermediate strip 36, together with the above-described ply edge strip 34p, alleviates strain generated at the end of the turned-up portion 38b. The material of the intermediate strip 36 is the same as that of the ply edge strip 34p.

The belt 14 is located between the tread 4 and the carcass 12 in the radial direction. The belt 14 includes a plurality of belt plies 40 stacked in the radial direction. The belt 14 of the tire 2 includes four belt plies 40. The four belt plies 40 are a first belt ply 40A, a second belt ply 40B, a third belt ply 40C, and a fourth belt ply 40D from the radially inner side. Among the four belt plies 40, the belt ply 40 having the largest width in the axial direction is the second belt ply 40B. An end of the second belt ply 40B is the end of the belt 14.

The width in the axial direction of the belt 14 is not less than 70% and not greater than 80% of the cross-sectional width (see JATMA or the like) of the tire 2.

Each belt ply 40 included in the belt 14 includes a large number of belt cords aligned with each other, which are not shown. The belt cords are steel cords. The density of the belt cords in each belt ply 40 is not less than 15 ends/5 cm and not greater than 30 ends/5 cm.

In each belt ply 40, the belt cords are tilted relative to the circumferential direction. In the tire 2, the direction in which the belt cords of the second belt ply 40B are tilted is opposite to the direction in which the belt cords of the third belt ply 40C are tilted. The directions in which the belt cords of the first belt ply 40A and the belt cords of the fourth belt ply 40D are tilted are set as appropriate according to the specifications of the tire 2. The tilt angle of the belt cords in each belt ply 40 is set as appropriate in a range of not less than 10 degrees and not greater than 60 degrees.

Each cushion layer 16 is located between the belt 14 and the carcass 12 (specifically, the ply body 38a of the carcass ply 38) at the end of the belt 14. In the meridian cross-section of the tire 2, the cushion layer 16 has a triangular cross-sectional shape. An inner end of the cushion layer 16 is located axially inward of the end of the belt 14. An outer end of the cushion layer 16 is located axially outward of the end of the belt 14. The outer end of the cushion layer 16 is located radially inward of an outer end of the sidewall 6. The cushion layer 16 is formed from a flexible crosslinked rubber. The cushion layer 16 alleviates strain generated at the end of the belt 14.

Each steel filler 18 is located in the bead portion. The steel filler 18 is turned up around the core 32 from the inner side toward the outer side in the axial direction along the carcass ply 38. The steel filler 18 includes a large number of filler cords aligned with each other, which are not shown. A steel cord is used as each filler cord.

A first end, of the steel filler 18, which is located on the inner side in the axial direction is located radially outward of the core 32. The position of a second end, of the steel filler 18, which is located on the outer side in the axial direction coincides with the position of the first end in the radial direction, or the second end is located radially outward of the first end. The end of the above-described turned-up portion 38b is located radially outward of the second end of the steel filler 18.

The inner liner 20 is located inward of the carcass 12. The inner liner 20 is joined to the inner surface of the carcass 12 via an insulation (not shown) formed from a crosslinked rubber. The inner liner 20 forms an inner surface of the tire 2. The inner liner 20 is formed from a crosslinked rubber that has an excellent air blocking property. The inner liner 20 maintains the internal pressure of the tire 2.

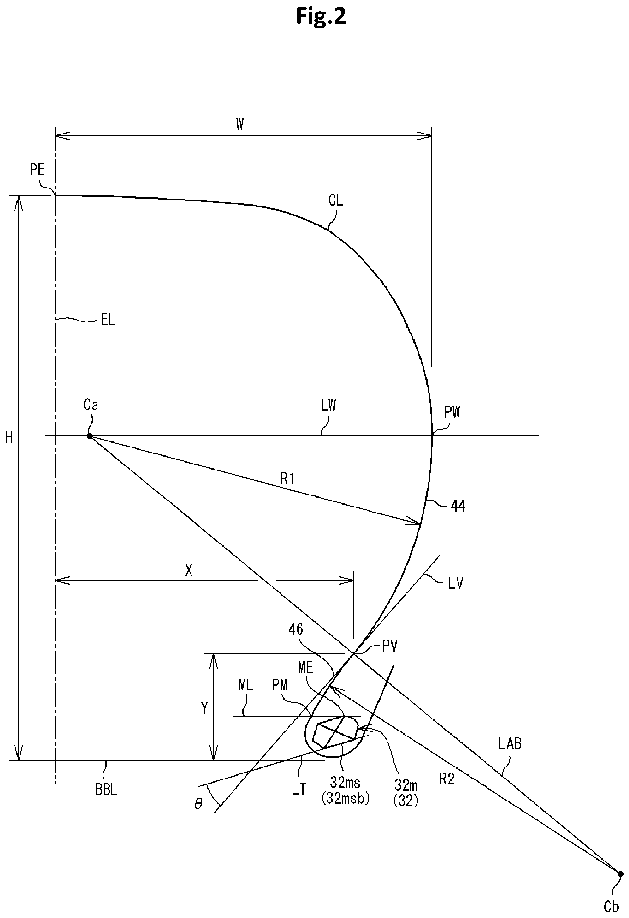

FIG. 2 shows a contour CL of the carcass 12 in the meridian cross-section of the tire 2 in the reference state.

The contour CL of the carcass 12 shown in FIG. 2 can be specified, for example, using a cross-sectional image of the tire 2 taken by a computer tomography method using X-rays (hereinafter, X-ray CT method). In this case, the cross-sectional image of the tire 2 taken by the X-ray CT method is captured in computer-aided design (CAD), and the contour CL of the carcass 12 is specified on this CAD.

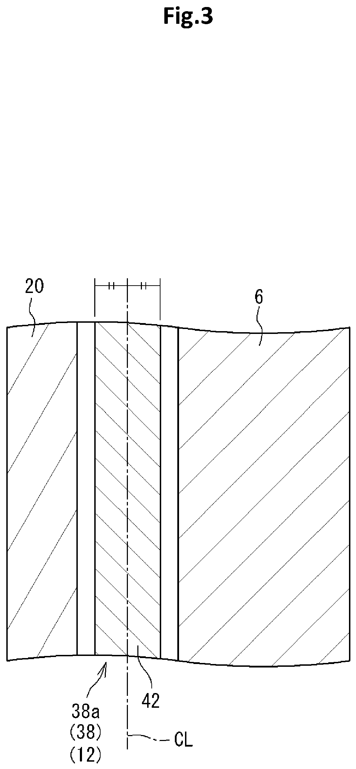

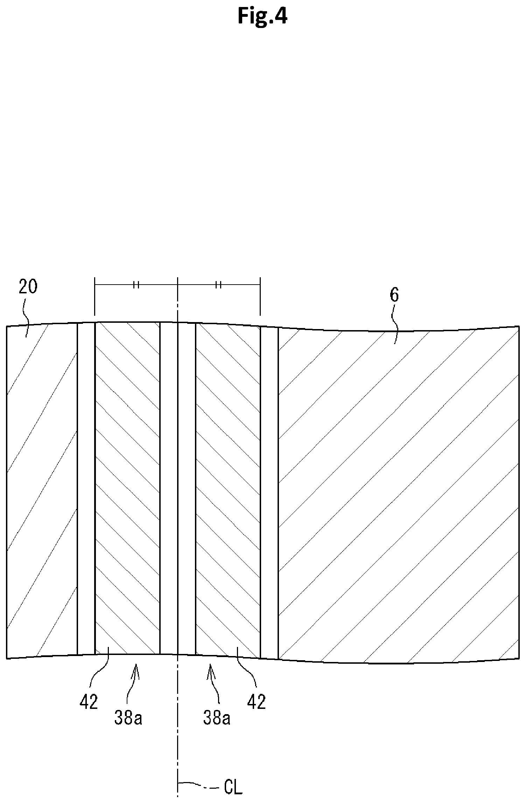

FIG. 3 shows a part of the meridian cross-section of the tire 2. As shown in FIG. 3, the contour CL of the carcass 12 is represented by a line obtained by connecting the centers of carcass cords 42 included in the ply body 38a. FIG. 4 shows the case where the carcass 12 includes two carcass plies 38 as an example of the case where the carcass 12 includes a plurality of carcass plies 38, as a modification of the carcass 12. In this case, the contour CL of the carcass 12 is represented by a line obtained by connecting the centers between inner ends of carcass cords 42 included in the ply body 38a located on the inner side and outer ends of carcass cords 42 included in the ply body 38a located on the outer side. In FIG. 3 and FIG. 4, components located on both sides of the carcass cords 42 are topping rubbers covering the carcass cords 42, although these components are not denoted by a reference character.

In FIG. 2, a position indicated by reference character PE is the point of intersection of the contour CL (hereinafter, case line CL) of the carcass 12 and the equator plane EL. The point of intersection PE corresponds to the equator at the case line CL. A length indicated by reference character H is the distance in the radial direction from the bead base line BBL to the equator PE.

In the tire 2, the equator PE coincides with a radially outer end of the case line CL. The distance H in the radial direction is also the cross-sectional height of the carcass 12.

In FIG. 2, a position indicated by reference character PW is an axially outer end of the case line CL. The case line CL has the maximum cross-sectional width at the axially outer end PW. The axially outer end PW is a maximum width position of the case line CL. A length indicated by reference character W is the distance in the axial direction from the equator plane EL to the axially outer end PW. Although not shown in FIG. 2, the outer end of the apex 34 is located radially inward of the maximum width position PW.

In FIG. 2, a position indicated by reference character ME is a radially outer end of the core body 32m. A solid line indicated by reference character ML is a straight line that passes through the radially outer end ME and extends in the axial direction. A position indicated by reference character PM is the point of intersection of the straight line ML and the case line CL. The point of intersection PM is a position, on the case line CL, corresponding to the radially outer end ME of the core body 32m. The point of intersection PM is a reference point of the case line CL.

In the tire 2, the case line CL is formed by combining a plurality of arcs and, if necessary, connecting the arcs to each other via straight lines. The case line CL has an outwardly convex shape at the tread portion, has an outwardly convex shape at the side portion and a radially outer portion of each bead portion, and has an inwardly concave shape at a radially inner portion of each bead portion. In the bead portion, an inflection point between an outwardly bulging portion and an inwardly recessed portion exists.

In the present disclosure, outwardly bulging means a shape curved from the inner surface side toward the outer surface side of the tire, and inwardly recessed means a shape curved from the outer surface side toward the inner surface side of the tire.

In the tire 2, of the case line CL, a radially inner portion from the axially outer end PW, specifically, a portion from the axially outer end PW to the reference point PM includes an outwardly bulging curved portion 44 and an inwardly recessed inversely curved portion 46. The inversely curved portion 46 is located radially inward of the curved portion 44, and is connected to the curved portion 44. The boundary between the curved portion 44 and the inversely curved portion 46 is the above-described inflection point. In FIG. 2, a position indicated by reference character PV is the inflection point.

The curved portion 44 of the tire 2 shown in FIG. 2 is represented by a single arc. This arc has a center Ca on a straight line (solid line LW in FIG. 2) that passes through the axially outer end PW and extends in the axial direction, and includes the axially outer end PW and the inflection point PV. In FIG. 2, an arrow indicated by reference character R1 represents the radius of this arc.

Although not shown, in the tire 2, the curved portion 44 may be represented by an arc (hereinafter, arc a) having a center on the straight line LW and including the axially outer end PW and an arc (hereinafter, arc b) tangent to the arc a and including the inflection point PV. In this case, the center of the arc b is located on a straight line passing through the center of the arc a and the tangent point between the arc a and the arc b.

In the tire 2, an arc having a center on the straight line LW and including the axially outer end PW and an arc including the inflection point PV may be connected to each other via one or more arcs. In this case, the curved portion 44 is represented by a plurality of arcs that include an arc having a center on the straight line LW and including the axially outer end PW and an arc including the inflection point PV, and is formed such that adjacent two arcs are tangent to each other.

In either case, the curved portion 44 includes an arc including the inflection point PV. In the present disclosure, the arc passing through the inflection point PV is a first arc.

In the tire 2, a part or the entirety of the curved portion 44 is represented by the first arc passing through the inflection point PV.

In the tire 2 shown in FIG. 2, the inversely curved portion 46 is also represented by a single arc. This arc has a center Cb on a straight line (solid line LAB in FIG. 2) passing through the inflection point PV and the center Ca of the arc (first arc) representing the curved portion 44, and includes the inflection point PV and the reference point PM. In FIG. 2, an arrow indicated by reference character R2 represents the radius of this arc.

Although not shown, in the tire 2, the inversely curved portion 46 may be represented by an arc (hereinafter, arc c) including the inflection point PV and an arc (hereinafter, arc d) tangent to the arc c and including the reference point PM. In this case, the center of the arc d is located on a straight line passing through the center of the arc c and the tangent point between the arc c and the arc d. In the tire 2, an arc including the inflection point PV and an arc including the reference point PM may be connected to each other via one or more arcs. In this case, the inversely curved portion 46 is represented by a plurality of arcs that include an arc including the inflection point PV and an arc including the reference point PM, and is formed such that adjacent two arcs are tangent to each other.

In either case, the inversely curved portion 46 includes an arc including the inflection point PV. In the present disclosure, the arc passing through the inflection point PV is a second arc.

If the configuration of the case line CL is unknown, the first arc representing the curved portion 44, the second arc representing the inversely curved portion 46, and the inflection point PV are obtained as follows.

The case line CL is specified on the basis of a cross-sectional image of the tire taken by the X-ray CT method. The axially outer end PW of the case line CL is obtained. An outwardly convex arc (hereinafter, outward arc) having a center on the straight line LW, which passes through the axially outer end PW and extends in the axial direction, and including the axially outer end PW is drawn. By drawing the outward arc while changing the radius thereof, an outward arc (hereinafter, first outward arc) having the maximum overlap length with the case line CL from the axially outer end PW is obtained. If the entirety of the curved portion 44 cannot be represented by the first outward arc, another outward arc having a center on a straight line passing through an end of the first outward arc and the center of the first outward arc is drawn. The outward arc is drawn while changing the radius thereof, and an outward arc (hereinafter, second outward arc) having the maximum overlap length with the case line CL from the end of the first outward arc is obtained. Tracing of the case line CL by the outward arc is repeated until the case line CL can no longer be traced by the outward arc. The end on the core body 32m side of an outward arc drawn last is specified as the inflection point PV, and this outward arc is specified as a first arc including the inflection point PV and representing a part or the entirety of the curved portion 44.

An inwardly convex arc (hereinafter, inward arc) including the inflection point PV and having a center on a straight line passing through the center of the first arc specified as described above and the inflection point PV and on the side opposite to the center of the first arc across the inflection point PV, is drawn. By drawing the inward arc while changing the radius thereof, an inward arc (hereinafter, first inward arc) having the maximum overlap length with the case line CL from the inflection point PV is obtained. The first inward arc is specified as a second arc including the inflection point PV and representing a part or the entirety of the inversely curved portion 46. If the entirety of the inversely curved portion 46 cannot be drawn by the first inward arc, tracing by the inward arc is repeated until the last inward arc including the reference point PM is drawn.

In the tire 2, a part or the entirety of the inversely curved portion 46 is represented by a second arc passing through the inflection point PV. The first arc representing a part or the entirety of the curved portion 44 and the second arc representing a part or the entirety of the inversely curved portion 46 are tangent to each other at the inflection point PV. The inflection point PV is located between the center of the first arc and the center of the second arc, and the center of the first arc, the inflection point PV, and the center of the second arc are located on the same straight line.

In the case line CL shown in FIG. 2, the first arc representing the curved portion 44 and the second arc representing the inversely curved portion 46 are tangent to each other at the inflection point PV. The inflection point PV is located between the center Ca of the first arc and the center Cb of the second arc, and the center Ca of the first arc, the inflection point PV, and the center Cb of the second arc are located on the same straight line LAB.

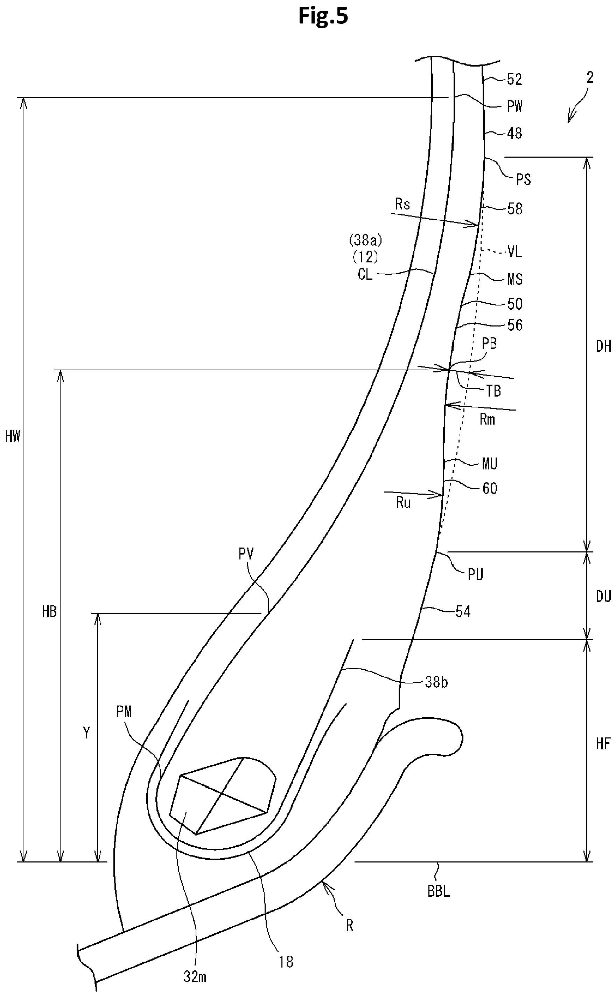

FIG. 5 shows a part of the meridian cross-section of the tire 2 shown in FIG. 1. As in FIG. 2, FIG. 5 shows the contour of the bead portion, the case line CL, and the contour of the steel filler 18 that are specified on the basis of a cross-sectional image, of the tire 2 in the reference state, obtained by the X-ray CT method. This case line CL is the same as the case line CL shown in FIG. 2.

The outer surface of the tire 2 includes the tread surface 22 and a pair of side surfaces 48 connected to ends of the tread surface 22. FIG. 5 shows a part of the side surface 48.

In the tire 2, a recess 50 is provided on each side surface 48 so as to be recessed inwardly. Of the side surface 48, a portion on the radially outer side of the recess 50 is an outer portion 52, and a portion on the radially inner side of the recess 50 is an inner portion 54. The side surface 48 of the tire 2 includes the recess 50, the outer portion 52 located radially outward of the recess 50, and the inner portion 54 located radially inward of the recess 50.

In FIG. 5, a position indicated by reference character PS is an outer end of the recess 50, and is the boundary between the recess 50 and the outer portion 52. A position indicated by reference character PU is an inner end of the recess 50, and is the boundary between the recess 50 and the inner portion 54.

As shown in FIG. 1, in the tire 2, the entirety of the recess 50 is provided on the outer surface of the sidewall 6 which forms a part of the side surface 48. The recess 50 continuously extends in the circumferential direction without interruption. The inner end PU of the recess 50 is located between the end of the turned-up portion 38b and an outer end of the chafer 8 in the radial direction. In FIG. 5, the outer end PS of the recess 50 is located radially inward of the axially outer end PW of the case line CL, and the position of the outer end PS is determined as appropriate in consideration of the specifications of the tire 2.

As described above, in the tire 2, the recess 50 is provided on each side surface 48. The tire 2 is lighter than a tire in which no recess 50 is provided. The recess 50 contributes to reduction of the mass of the tire 2.

If a recess is provided on each side surface of a tire so as to be recessed inwardly, surface strain is increased as compared to that of each side surface of a tire in which no recess is provided. In particular, each portion where the recess exists is thinner than the other portion, so that, when the tire is inflated, the surface strain of this portion is increased. The increase in surface strain promotes occurrence of superficial cracking (SFC).

In order to improve SFC resistance while achieving mass reduction, the present inventor has made detailed examination of a case line in a reference state, focusing on a carcass as a component forming the framework of a tire. As a result, the present inventor has found that an increase in surface strain can be suppressed by providing a recess on the radially outer side with respect to an inflection point that is the boundary between a curved portion and an inversely curved portion and exists in a bead portion, and thus has completed the present invention.

In the tire 2, the recess 50 is located radially outward of the inflection point PV. In the tire 2, an increase in surface strain at the recess 50 when the tire 2 is inflated is suppressed. Even though the recess 50 is provided on the side surface 48, occurrence of SFC is suppressed in the tire 2. The tire 2 can achieve improvement of SFC resistance while achieving mass reduction. Moreover, in the tire 2, adjustment such as increasing the amount of an antioxidant in a rubber composition for the sidewall 6, etc., forming the side surface 48 is not required in order to suppress occurrence of SFC. The tire 2 can improve SFC resistance, while achieving mass reduction, without performing configuration adjustment of the rubber composition which may lead to an increase in the material cost.

In FIG. 2, a length indicated by reference character X is the distance in the axial direction from the equator plane EL of the tire 2 to the inflection point PV. A length indicated by reference character Y is the distance in the radial direction from the bead base line BBL to the inflection point PV.

In the tire 2, the ratio (X/W) of the distance X in the axial direction from the equator plane EL to the inflection point PV to the distance W in the axial direction from the equator plane EL to the axially outer end PW is not less than 70% and not greater than 85%, and the ratio (Y/H) of the distance Y in the radial direction from the bead base line BBL to the inflection point PV to the distance H in the radial direction from the bead base line BBL to the equator PE is preferably not less than 15% and not greater than 22%.

When the ratio (X/W) is set to be not less than 70% and the ratio (Y/H) is set to be not less than 15%, the inflection point PV is located at an appropriate interval from the core 32. Bending caused by the action of a load is inhibited from being large, so that an increase in surface strain is suppressed. In the tire 2, SFC resistance is improved. From this viewpoint, more preferably, the ratio (X/W) is not less than 75% and the ratio (Y/H) is not less than 17%.

When the ratio (X/W) is set to be not greater than 85% and the ratio (Y/H) is set to be not greater than 22%, the inflection point PV is located at an appropriate interval from the maximum width position PW. Deformation of the carcass 12 at the bead portion when the tire 2 is inflated is suppressed, and in this case as well, an increase in surface strain is suppressed. In the tire 2, good SFC resistance is maintained. From this viewpoint, more preferably, the ratio (X/W) is not greater than 80% and the ratio (Y/H) is not greater than 20%.

As described above, preferably, the ratio (X/W) is not less than 70% and not greater than 85%, and the ratio (Y/H) is not less than 15% and not greater than 22%. In this case, in the tire 2, the position of the inflection point PV which is the boundary between the curved portion 44 and the inversely curved portion 46 is determined in consideration of the position of the core 32 and the position of the axially outer end PW. In the tire 2, in particular, movement of the carcass 12 at the bead portion is effectively suppressed. At the recess 50, an increase in surface strain due to the action of a load is suppressed. In the tire 2, improvement of SFC resistance can be achieved. The recess 50 contributes to mass reduction, so that the tire 2 can achieve improvement of SFC resistance while achieving mass reduction.

In FIG. 5, a dotted line VL represents a virtual side surface obtained on the assumption that the recess 50 is not present on the side surface 48. In the meridian cross-section of the tire 2, the virtual side surface VL is represented by a single arc that is tangent to a line representing the contour of the outer portion 52 (hereinafter, referred to as contour line), at the outer end PS of the recess 50, and that is tangent to a contour line of the inner portion 54 at the inner end PU of the recess 50, or is represented by a plurality of arcs that include an arc tangent to the contour line of the outer portion 52 at the outer end PS and an arc tangent to the contour line of the inner portion 54 at the inner end PU and among which adjacent arcs are tangent to each other.

A position indicated by reference character PB is the bottom of the recess 50. The bottom PB is a position at which the depth, from the virtual side surface VL, measured along a normal line that is normal to the virtual side surface VL is largest.

As shown in FIG. 5, the bottom PB of the recess 50 is located between the inflection point PV and the axially outer end PW of the case line CL in the radial direction. Accordingly, in the tire 2, SFC resistance and external damage resistance are well balanced. From this viewpoint, the bottom PB of the recess 50 is preferably located between the inflection point PV and the axially outer end PW of the case line CL in the radial direction. In the tire 2, the entirety of the recess 50 is more preferably located between the inflection point PV and the axially outer end PW in the radial direction.

In FIG. 5, a length indicated by reference character HB is the distance in the radial direction from the bead base line BBL to the bottom PB of the recess 50. A length indicated by reference character Y is the distance Y in the radial direction in FIG. 2. In FIG. 5, a length indicated by reference character HW is the distance in the radial direction from the bead base line BBL to the axially outer end PW of the case line CL.

The movement of the carcass 12 at the bead portion is larger at a position closer to the inflection point PV, and is smaller at a position farther from the inflection point PV.

In the tire 2, the ratio (HB/Y) of the distance HB in the radial direction from the bead base line BBL to the bottom PB of the recess 50 to the distance Y in the radial direction from the bead base line BBL to the inflection point PV is preferably not less than 1.8. Accordingly, the recess 50 is provided at a portion where the movement of the carcass 12 is suppressed to be small. An increase in surface strain is suppressed, so that SFC resistance is improved in the tire 2. From this viewpoint, the ratio (HB/Y) is more preferably not less than 1.9.

In the tire 2, the ratio (HB/HW) of the distance HB in the radial direction from the bead base line BBL to the bottom PB of the recess 50 to the distance HW in the radial direction from the bead base line BBL to the axially outer end PW is preferably not greater than 0.9. Accordingly, the recess 50 is provided at a position where external damage is less likely to occur. In the tire 2, external damage resistance is improved. From this viewpoint, the ratio (HB/HW) is more preferably not greater than 0.8.

In FIG. 5, a length indicated by reference character HF is the distance in the radial direction from the bead base line BBL to the end of the turned-up portion 38b. The distance HF in the radial direction is a turned-up portion height.

As shown in FIG. 5, in the tire 2, the end of the turned-up portion 38b is located radially inward of the inflection point PV. Accordingly, interference of the turned-up portion 38b with the movement of the carcass 12, specifically, the ply body 38a, is suppressed. The carcass 12 moves in a state where the case line CL is maintained in an appropriate shape, so that an increase in surface strain is suppressed. In the tire 2, SFC resistance is improved. From this viewpoint, the end of the turned-up portion 38b is preferably located radially inward of the inflection point PV. Specifically, the ratio (HF/Y) of the turned-up portion height HF to the distance Y in the radial direction is preferably not greater than 0.95 and more preferably not greater than 0.90. From the viewpoint that the carcass ply 38 is sufficiently fixed to the bead 10 and occurrence of ply turn-up loosening is suppressed, the ratio (HF/Y) is preferably not less than 0.80 and more preferably not less than 0.85.

As shown in FIG. 5, the inner end PU of the recess 50 is located radially outward of the end of the turned-up portion 38b. In the tire 2, a distance DU in the radial direction from the end of the turned-up portion 38b to the inner end PU of the recess 50 is preferably not less than 10 mm. Accordingly, the recess 50 is provided at an appropriate interval from the end of the turned-up portion 38b. In the tire 2, strain is less likely to be concentrated on the end of the turned-up portion 38b. The tire 2 has good bead durability. From this viewpoint, the distance DU in the radial direction is more preferably not less than 12 mm. From the viewpoint of being able to form the recess 50 having a sufficient size, the distance DU in the radial direction is preferably not greater than 20 mm and more preferably not greater than 18 mm.

In FIG. 5, a length indicated by reference character DH is the distance in the radial direction from the inner end PU to the outer end PS of the recess 50. The distance DH in the radial direction is the width of the recess 50. A length indicated by reference character TB is the depth of the recess 50. The depth TB is represented as the shortest distance from the virtual side surface VL to the bottom PB.

In the tire 2, the ratio (DH/Y) of the width DH of the recess 50 to the distance Y in the radial direction is preferably not less than 1.0 and not greater than 1.8.

When the ratio (DH/Y) is set to be not less than 1.0, the recess 50 that can effectively contribute to mass reduction is formed. This recess 50 has an appropriate size, so that an increase in surface strain at the recess 50 is suppressed. In the tire 2, good SFC resistance is achieved. From this viewpoint, the ratio (DH/Y) is more preferably not less than 1.1.

When the ratio (DH/Y) is set to be not greater than 1.8, the influence of the recess 50 on the stiffness of the side portion is suppressed. The movement of the carcass 12 is suppressed to be small, so that an increase in surface strain is suppressed. In the tire 2, good SFC resistance is maintained. From this viewpoint, the ratio (DH/Y) is more preferably not greater than 1.7.

In the tire 2, from the viewpoint of forming the recess 50 that can effectively contribute to mass reduction, the ratio (TB/DH) of the depth TB of the recess 50 to the width DH of the recess 50 is preferably not less than 0.02 and more preferably not less than 0.04. From the viewpoint that a portion from the carcass 12 to the recess 50 has a sufficient thickness and occurrence of external damage is effectively suppressed, the ratio (TB/DH) is preferably not greater than 0.08 and more preferably not greater than 0.06.

In the tire 2, the recess 50 includes a bottom portion 56, an outer boundary portion 58, and an inner boundary portion 60. The bottom portion 56 includes the bottom PB. The outer boundary portion 58 is located radially outward of the bottom portion 56 and includes the outer end PS of the recess 50. The inner boundary portion 60 is located radially inward of the bottom portion 56 and includes the inner end PU of the recess 50.

The outer boundary portion 58 connects the bottom portion 56 and the above-described outer portion 52. In the meridian cross-section of the tire 2, the contour of the outer boundary portion 58 is represented by an arc that is tangent to the contour line of the outer portion 52 at the outer end PS of the recess 50.

In FIG. 5, an arrow indicated by reference character Rs represents the radius of the arc that represents the contour of the outer boundary portion 58. The contour of the outer boundary portion 58 is represented by an outwardly convex arc. A position indicated by reference character MS is the boundary between the outer boundary portion 58 and the bottom portion 56. The boundary MS is also an outer end of the bottom portion 56.

In the tire 2, in the meridian cross-section thereof, the contour of the outer boundary portion 58 may be represented by a straight line that connects the outer end PS of the recess 50 and the outer end MS of the bottom portion 56.

The inner boundary portion 60 connects the bottom portion 56 and the above-described inner portion 54. In the meridian cross-section of the tire 2, the contour of the inner boundary portion 60 is represented by an arc that is tangent to the contour line of the inner portion 54 at the inner end PU of the recess 50.

In FIG. 5, an arrow indicated by reference character Ru represents the radius of the arc that represents the contour of the inner boundary portion 60. The contour of the inner boundary portion 60 is represented by an outwardly convex arc. A position indicated by reference character MU is the boundary between the inner boundary portion 60 and the bottom portion 56. The boundary MU is also an inner end of the bottom portion 56.

In the tire 2, in the meridian cross-section thereof, the contour of the inner boundary portion 60 may be represented by a straight line that connects the inner end PU of the recess 50 and the inner end MU of the bottom portion 56.

In the tire 2, preferably, in the meridian cross-section thereof, the contour of the outer boundary portion 58 is represented by an arc that is tangent to the contour line of the outer portion 52 at the outer end PS of the recess 50 and that has a radius Rs of not less than 40 mm, or the contour of the inner boundary portion 60 is represented by an arc that is tangent to the contour line of the inner portion 54 at the inner end PU of the recess 50 and that has a radius Ru of not less than 40 mm.

Accordingly, concentration of strain on the outer boundary portion 58 or the inner boundary portion 60 is suppressed. An increase in surface strain is suppressed, so that improvement of SFC resistance is achieved in the tire 2. From this viewpoint, in the case where the contour of the outer boundary portion 58 is represented by an arc, the radius Rs of this arc is more preferably not less than 50 mm and further preferably not less than 60 mm. In the case where the contour of the inner boundary portion 60 is represented by an arc, the radius Ru of this arc is more preferably not less than 50 mm and further preferably not less than 60 mm.

From the viewpoint of being able to achieve further improvement of SFC resistance, in the tire 2, more preferably, in the meridian cross-section thereof, the contour of the outer boundary portion 58 is represented by an arc that is tangent to the contour line of the outer portion 52 at the outer end PS of the recess 50 and that has a radius Rs of not less than 40 mm, and the contour of the inner boundary portion 60 is represented by an arc that is tangent to the contour line of the inner portion 54 at the inner end PU of the recess 50 and that has a radius Ru of not less than 40 mm. In this case, the radius Rs of the arc that represents the contour of the outer boundary portion 58 is further preferably not less than 50 mm and particularly preferably not less than 60 mm. The radius Ru of the arc that represents the contour of the inner boundary portion 60 is further preferably not less than 50 mm and particularly preferably not less than 60 mm.

From the viewpoint of forming the recess 50 that can contribute to mass reduction, in the case where the contour of the outer boundary portion 58 is represented by an arc, the radius Rs of this arc is preferably not greater than 100 mm and more preferably not greater than 80 mm. From the same viewpoint, in the case where the contour of the inner boundary portion 60 is represented by an arc, the radius Ru of this arc is preferably not greater than 100 mm and more preferably not greater than 80 mm.

In the tire 2, in the meridian cross-section thereof, the contour of the bottom portion 56 is represented by an arc. The arc that represents the contour of the bottom portion 56 is tangent to the arc that represents the outer boundary portion 58, at the outer end MS of the bottom portion 56, and is tangent to the arc that represents the inner boundary portion 60, at the inner end MU of the bottom portion 56.

In FIG. 5, an arrow indicated by reference character Rm represents the radius of the arc that represents the contour of the bottom portion 56. The contour of the bottom portion 56 is represented by an inwardly convex arc. The radius Rm of the arc that represents the contour of the bottom portion 56 is adjusted as appropriate according to the specifications of the recess 50.

In the tire 2, when the contour of the bottom portion 56 is represented by an arc in addition to the outer boundary portion 58 and the inner boundary portion 60, the force acting on the recess 50 is effectively distributed over the entirety of the recess 50. Accordingly, an increase in surface strain at the recess 50 is suppressed. In the tire 2, improvement of SFC resistance is achieved. From this viewpoint, in the meridian cross-section of the tire 2, in the case where the contours of the outer boundary portion 58 and the inner boundary portion 60 are represented by arcs, the recess 50 is preferably formed such that the contour of the bottom portion 56 is represented by an arc and the arc that represents the contour of the bottom portion 56 is tangent to the arc that represents the outer boundary portion 58, at the outer end MS of the bottom portion 56, and is tangent to the arc that represents the inner boundary portion 60, at the inner end MU of the bottom portion 56.

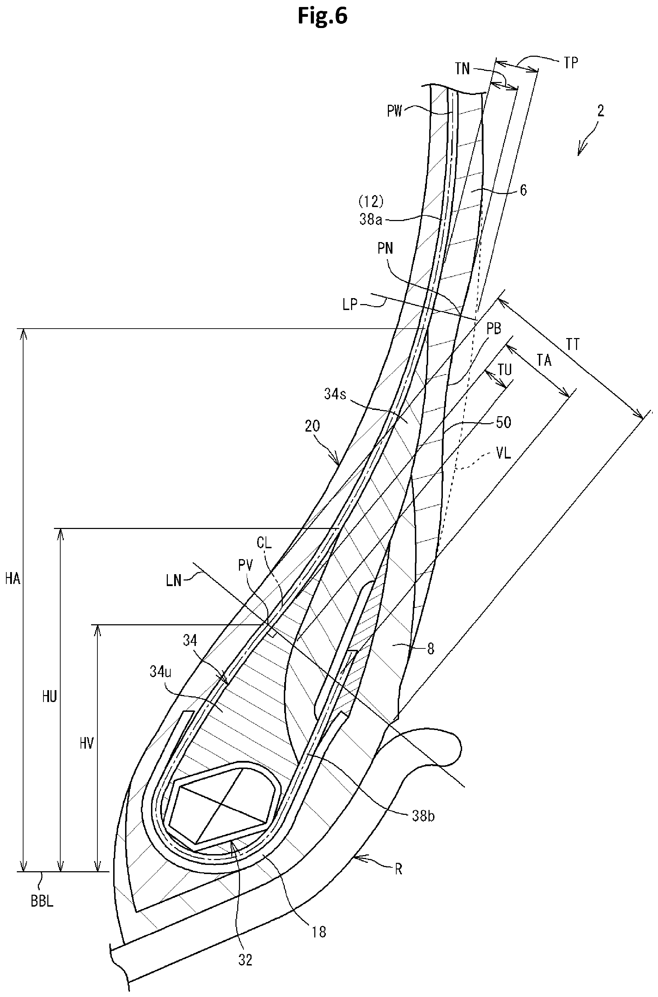

FIG. 6 shows the bead portion of the tire 2 shown in FIG. 1.

In FIG. 6, a solid line LP is a normal line that is normal to the interface between the ply body 38a of the carcass 12 and the apex 34. A length indicated by reference character TN is a thickness, from the carcass 12 (specifically, the ply body 38a) to the recess 50, measured along the normal line LP. In the tire 2, the thickness TN is represented as the minimum thickness from the ply body 38a to the recess 50. A position indicated by reference character PN is a position, on the recess 50, at which the thickness from the ply body 38a to the recess 50 is a minimum thickness. A length indicated by reference character TP is a virtual thickness, from the ply body 38a to the virtual side surface VL, measured along a line segment indicating the minimum thickness TN, that is, the normal line LP.

In the tire 2, the ratio (TN/TP) of the minimum thickness TN to the virtual thickness TP is preferably not less than 30% and preferably not greater than 70%.

When the ratio (TN/TP) is set to be not less than 30%, an increase in surface strain at the recess 50 is suppressed, and the minimum thickness TN is set to the required thickness. In the tire 2, occurrence of superficial cracking is suppressed. From this viewpoint, the ratio (TN/TP) is more preferably not less than 40%.

When the ratio (TN/TP) is set to be not greater than 70%, the recess 50 that can contribute to mass reduction is formed. From this viewpoint, the ratio (TN/TP) is more preferably not greater than 60%.

In FIG. 6, a solid line LN is a normal line that is normal to the interface between the ply body 38a of the carcass 12 and the apex 34 and passes through the inflection point PV specified in the case line CL in the reference state.

A length indicated by reference character TT is the thickness of the tire 2 measured along the normal line LN. In the present disclosure, the thickness TT is the thickness of the tire 2 at the inflection point PV.

A length indicated by reference character TA is the thickness of the apex 34 measured along the normal line LN. In the present disclosure, the thickness TA is the thickness of the apex 34 at the inflection point PV.

When each thickness is measured in the cross-section of the tire 2 obtained by cutting the tire 2 along the plane including the rotation axis of the tire 2, a position, from the end of the turned-up portion 38b in the case line CL shown in FIG. 2, having a length equal to the length from the end of the turned-up portion 38b to the inflection point PV is used as the position of the inflection point PV.

In the tire 2, the ratio (TA/TT) of the thickness TA of the apex 34 to the thickness TT of the tire 2 at the inflection point PV is preferably not less than 42% and not greater than 50%.

When the ratio (TA/TT) is set to be not less than 42%, the apex 34 effectively increases the stiffness of the bead portion. Accordingly, strain generated in the bead portion is reduced. An increase in surface strain is suppressed, so that good SFC resistance is maintained in the tire 2. From this viewpoint, the ratio (TA/TT) is more preferably not less than 44%.

When the ratio (TA/TT) is set to be not greater than 50%, deformation of the carcass 12 at the bead portion when the tire 2 is inflated is suppressed. Strain generated in the bead portion is reduced. In this case as well, an increase in surface strain is suppressed, so that good SFC resistance is maintained. From this viewpoint, the ratio (TA/TT) is more preferably not greater than 49%.

In the tire 2, the above-described normal line LN also intersects the inner apex 34u. In FIG. 6, a length indicated by reference character TU is the thickness of the inner apex 34u measured along the normal line LN. In the present disclosure, the thickness TU is the thickness of the inner apex 34u at the inflection point PV.

In the tire 2, from the viewpoint of improvement of SFC resistance, the ratio (TU/TA) of the thickness TU of the inner apex 34u to the thickness TA of the apex 34 at the inflection point PV is not less than 30% and preferably not less than 35%. The ratio (TU/TA) is not greater than 45% and preferably not greater than 40%.

In FIG. 6, a length indicated by reference character HV is the distance in the radial direction from the bead base line BBL to the inflection point PV specified in the case line CL in the reference state. The distance HV in the radial direction is an inflection point height. A length indicated by reference character HA is the distance in the radial direction from the bead base line BBL to the outer end of the apex 34. The distance HA in the radial direction is an apex height. A length indicated by reference character HU is the distance in the radial direction from the bead base line BBL to the outer end of the inner apex 34u. The distance HU in the radial direction is an inner apex height.

In the tire 2, the ratio (HA/HV) of the apex height HA to the inflection point height HV is preferably not less than 2.0 and not greater than 2.4.

When the ratio (HA/HV) is set to be not less than 2.0, the apex 34 effectively increases the stiffness of the bead portion. Accordingly, an increase in surface strain is suppressed. In the tire 2, SFC resistance is improved. From this viewpoint, the ratio (HA/HV) is more preferably not less than 2.1.

When the ratio (HA/HV) is set to be not greater than 2.4, deformation of the carcass 12 at the bead portion when the tire 2 is inflated is suppressed. In this case as well, an increase in surface strain is suppressed. In the tire 2, good SFC resistance is maintained. From this viewpoint, the ratio (HA/HV) is more preferably not greater than 2.3.

In the tire 2, the ratio (HU/HV) of the inner apex height HU to the inflection point height HV is preferably not less than 1.2 and not greater than 1.6.

When the ratio (HU/HV) is set to be not less than 1.2, the inner apex 34u effectively increases the stiffness of the bead portion. Accordingly, an increase in surface strain is suppressed. In the tire 2, SFC resistance is improved. From this viewpoint, the ratio (HU/HV) is more preferably not less than 1.3.

When the ratio (HU/HV) is set to be not greater than 1.6, deformation of the carcass 12 at the bead portion when the tire 2 is inflated is suppressed. In this case as well, an increase in surface strain is suppressed. In the tire 2, good SFC resistance is maintained. From this viewpoint, the ratio (HU/HV) is more preferably not greater than 1.5.

In FIG. 2, a solid line LV is a tangent line that is tangent to the case line CL at the inflection point PV. A solid line LT is a straight line that includes a straight line representing the contour of the bottom surface 32msb of the core body 32m in the meridian cross-section of the tire 2. An angle θ is an angle formed between the tangent line LV and the straight line LT. In the present disclosure, the angle θ is an angle formed between the tangent line LV which is tangent to the contour of the carcass 12 at the inflection point PV and the straight line representing the contour of the bottom surface 32msb.

In the tire 2, the angle θ is preferably not less than 25 degrees and not greater than 30 degrees.

When the angle θ is set to be not less than 25 degrees, falling-down of the case line CL at the bead portion is effectively suppressed. Bending caused by the action of a load is inhibited from being large, so that an increase in surface strain at the recess 50 is suppressed. In the tire 2, SFC resistance is improved. From this viewpoint, the angle θ is more preferably not less than 26 degrees.

When the angle θ is set to be not greater than 30 degrees, deformation of the carcass 12 at the bead portion when the tire 2 is inflated is suppressed. In this case as well, an increase in surface strain at the recess 50 is suppressed. In the tire 2, good SFC resistance is maintained. From this viewpoint, the angle θ is more preferably not greater than 29 degrees.

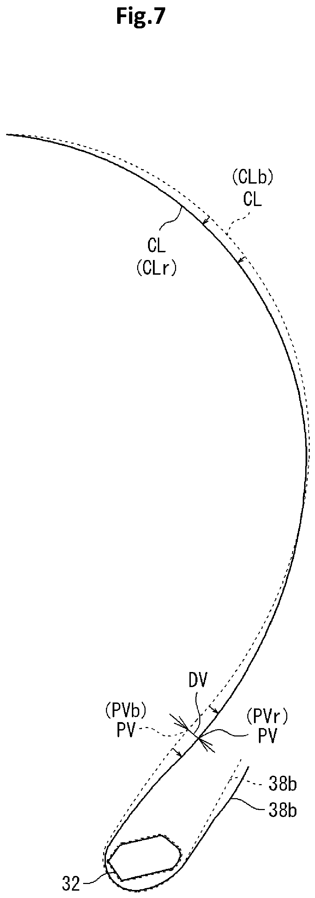

FIG. 7 shows the case line CL in the meridian cross-section of the tire 2. FIG. 7 shows movement of the case line CL when the state of the tire 2 is changed from the reference state to the standardized state, in other words, when the tire 2 is fitted on the rim R and the internal pressure of the tire 2 is changed from 50 kPa to the standardized internal pressure.

In FIG. 7, a dotted line CLb represents the case line CL in the reference state, and a solid line CLr represents the case line CL in the standardized state. In FIG. 7, a position indicated by reference character PVb is the position of the inflection point PV in the case line CL in the reference state, and a position indicated by reference character PVr is the position of the inflection point PV in the case line CL in the standardized state. The position PVr of the inflection point PV in the case line CL in the standardized state is specified by the position having a length from the end of the turned-up portion 38b that is equal to the length from the end of the turned-up portion 38b to the position PVb of the inflection point PV in the case line CL in the reference state.

As shown in FIG. 7, by changing the state of the tire 2 from the reference state to the standardized state, the case line CL around the boundary between the tread portion and the side portion moves inwardly, and the case line CL at the bead portion moves outwardly. In FIG. 7, an arrow indicated by reference character DV is the movement distance of the inflection point PV. The movement distance DV is represented by the length of a line segment connecting the position PVb and the position PVr.

As described above, in the tire 2, the position of the inflection point PV which is the boundary between the curved portion 44 and the inversely curved portion 46 controls movement of the case line CL, and in particular, movement of the case line CL at the bead portion is suppressed. Specifically, the movement distance DV of the inflection point PV when the tire 2 is fitted on the rim R and the internal pressure of the tire 2 is changed from 50 kPa to the standardized internal pressure is not greater than 5 mm. In the tire 2, deformation of the carcass 12 at the bead portion when the tire 2 is inflated is suppressed, so that an increase in surface strain is suppressed. In the tire 2, good SFC resistance is maintained. From this viewpoint, the movement distance DV is preferably not greater than 3 mm.

The following will describe a production method for the tire 2. In the production of the tire 2, an uncrosslinked tire 2, that is, a green tire, for the tire 2 shown in FIG. 1 is prepared by combining members such as the tread 4 and the sidewalls 6 on a forming machine (not shown). The tire 2 is obtained by pressurizing and heating the green tire in a mold of a vulcanizing machine described later. The production method for the tire 2 includes a step of preparing a green tire that is in an unvulcanized state of the tire 2, and a step of pressurizing and heating the green tire in a mold.

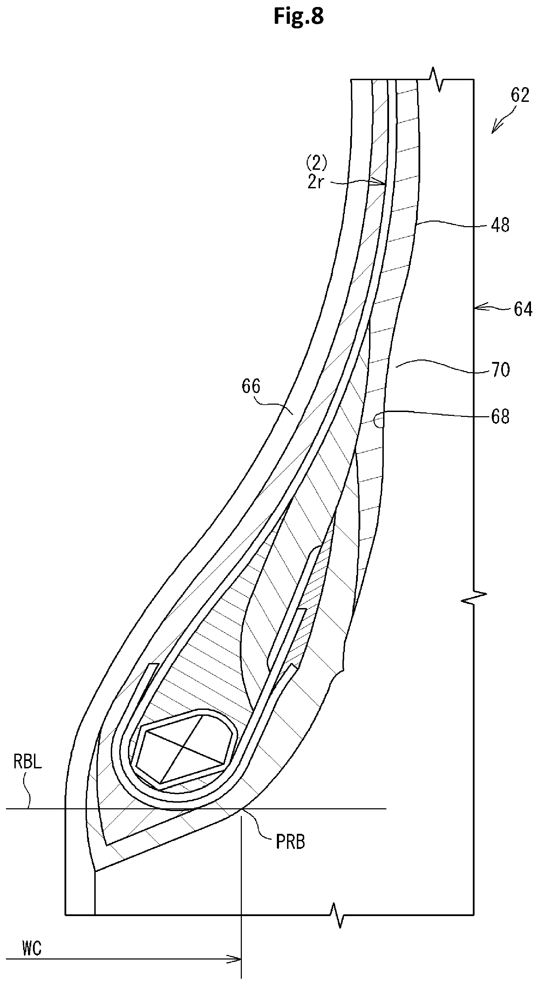

FIG. 8 shows a part of a vulcanizing machine 62 used in the production method for the tire 2. In FIG. 8, the right-left direction corresponds to the axial direction of the tire 2, and the up-down direction corresponds to the radial direction of the tire 2. The direction perpendicular to the surface of the drawing sheet of FIG. 8 is the circumferential direction of the tire 2.

In the present disclosure, for convenience of description, the vulcanizing machine 62 will be described on the basis of the dimensions of the tire 2.

In the production method for the tire 2, a green tire 2r is vulcanized in the vulcanizing machine 62. The vulcanizing machine 62 includes a mold 64 and a bladder 66.

The mold 64 has a cavity surface 68 on the inner surface thereof. The cavity surface 68 comes into contact with the outer surface of the green tire 2r and shapes the outer surface of the tire 2. Although not described in detail, the mold 64 is a segmented mold.

The bladder 66 is located inside the mold 64. The bladder 66 is formed from a crosslinked rubber. The interior of the bladder 66 is filled with a heating medium such as steam or a pressurizing medium such as nitrogen gas. Accordingly, the bladder 66 expands. The bladder 66 shown in FIG. 8 is in a state where the bladder 66 is filled with the heating medium to be expanded. The bladder 66 comes into contact with the inner surface of the green tire 2r and shapes the inner surface of the tire 2. In the production method for the tire 2, a rigid core (not shown) made of metal may be used instead of the bladder 66. The rigid core has a toroidal outer surface. The shape of this outer surface is approximated to the shape of the inner surface of the tire 2 in a state where the tire 2 is filled with air and the internal pressure of the tire 2 is maintained at 5% of the standardized internal pressure.

In the production of the tire 2, the green tire 2r is placed into the mold 64 that is set at a predetermined temperature. Thereafter, the mold 64 is closed. The bladder 66 expanded by the filling with the heating medium presses the green tire 2r against the cavity surface 68 from the inside. The bladder 66 expanded by the filling with the pressurizing medium further presses the green tire 2r against the cavity surface 68 from the inside. The green tire 2r is pressurized and heated inside the mold 64 for a predetermined time. Accordingly, the rubber composition of the green tire 2r is cross-linked to obtain the tire 2.

In the production method, the vulcanization conditions such as temperature, pressure, and time for pressurizing and heating the green tire 2r in the mold 64 are not particularly limited, and vulcanization conditions that are set for conventional tires are adopted.

In FIG. 8, a solid line RBL is a reference line corresponding to the above-described bead base line BBL. This reference line is also referred to as bead ring line. Reference character PRB indicates the point of intersection of the bead ring line RBL and the cavity surface 68. The point of intersection PRB is also referred to as clip width reference point. A length indicated by reference character WC is the distance in the axial direction from a first clip width reference point PRB to a second clip width reference point PRB. The distance WC in the axial direction is a clip width of the mold 64. The clip width WC corresponds to the rim width WR of the rim R onto which the tire 2 obtained by the mold 64 is fitted.

In the production method, the clip width WC of the mold 64 is larger than the rim width WR of the rim R. Specifically, the ratio (WC/WR) of the clip width WC to the rim width WR is not less than 1.02 and not greater than 1.17.

When fitting the tire 2 onto the rim R, the interior of the tire 2 is filled with air. Accordingly, each bead portion moves in the axial direction on the seat RS of the rim R, and this bead portion comes into contact with the flange RF of the rim R. As a result, the tire 2 is fitted on the rim R.

In the production method, since the ratio (WC/WR) is not less than 1.02, the internal pressure of the tire 2 is maintained at an appropriate pressure without becoming excessively high when fitting the tire 2 produced by the mold 64 onto the rim R. The tire 2 is easily fitted onto the rim R. From this viewpoint, the ratio (WC/WR) is preferably not less than 1.05.

Since the ratio (WC/WR) is not greater than 1.17, the case line CL having an appropriate shape is formed in the tire 2 produced by the mold 64. The mold 64 contributes to forming the inflection point PV of the case line CL at the above-described position. In the tire 2, deformation of the carcass 12 at the bead portion when the tire 2 is inflated is effectively suppressed, so that an increase in surface strain at the recess 50 is suppressed. In the tire 2, improvement of SFC resistance is achieved. From this viewpoint, the ratio (WC/WR) is preferably not greater than 1.13 and more preferably not greater than 1.10.

Although not described in detail, in the tire 2, the position of the inflection point PV in the case line CL is adjusted by setting the thickness of the tire 2 at the bead portion to be smaller. Therefore, in the production method for the tire 2, there is a concern that the contact pressure with the cavity surface 68 may be decreased at the bead portion. If the required contact pressure cannot be obtained, air cannot be discharged sufficiently, and an appearance defect (also referred to as bareness) due to residual air may occur.

As described above, the recess 50 is provided on each side surface in the tire 2. On the cavity surface 68 of the mold 64 which is used for producing the tire 2, a projection 70 corresponding to the recess 50 is provided. The projection 70 increases the contact pressure. Air is effectively discharged, so that occurrence of bareness is suppressed. In the production method, the tire 2 that can achieve improvement of SFC resistance, while achieving mass reduction, without impairing appearance quality, is obtained.

As is obvious from the above description, according to the present invention, the heavy duty tire 2 that can achieve improvement of SFC resistance while achieving mass reduction is obtained.

The above-described technology capable of achieving improvement of SFC resistance while achieving mass reduction can be applied to various tires.

## Claims

1. A heavy duty tire (2) comprising a pair of beads (10) and a carcass (12) extending on and between a first bead (10) and a second bead (10) out of the pair of beads (10), wherein
the bead (10) includes a core (32) and an apex (34) located radially outward of the core (32) and including an inner apex (34u) and an outer apex (34s),
the carcass (12) includes a carcass ply (38) having a ply body (38a) which extends between the cores (32) of the beads (10),
in a meridian cross-section of the tire (2), a contour (CL) of the carcass (12) includes an outwardly bulging curved portion (44) and an inwardly recessed inversely curved portion (46) located radially inward of the curved portion (44),
the inversely curved portion (46) is connected to the curved portion (44),
a boundary between the curved portion (44) and the inversely curved portion (46) is an inflection point (PV),
a part or an entirety of the curved portion (44) is represented by a first arc including the inflection point (PV),
a part or an entirety of the inversely curved portion (46) is represented by a second arc including the inflection point (PV),
the first arc and the second arc are tangent to each other at the inflection point (PV),
each side surface of the tire (2) includes a recess (50) recessed inwardly, an outer portion (52) located radially outward of the recess (50), and an inner portion (54) located radially inward of the recess (50), and
the recess (50) is located radially outward of the inflection point (PV),
**characterized in that** the carcass ply (38) includes a large number of carcass cords (42) aligned with each other, each of the carcass cords (42) is a steel cord,
and a ratio (TU/TA) of a thickness (TU) of the inner apex (34u) at the inflection point (PV) measured along a normal line (LN) to a thickness (TA) of the apex (34) at the inflection point (PV) measured along the normal line (LN) is not less than 30 % and not greater than 45 %, the normal line (LN) being normal to an interface between the ply body (38a) of the carcass (12) and the apex (34) and passing through the inflection point (PV) specified in the contour (CL) in a reference state, in which the tire (2) is fitted on a standardized rim, the internal pressure of the tire (2) is adjusted to 50 kPa, and no load is applied to the tire (2).

2. The heavy duty tire (2) according to claim 1, wherein
a ratio (X/W) of a distance (X) in an axial direction from an equator plane (EL) of the tire (2) to the inflection point (PV) to a distance (W) in the axial direction from the equator plane (EL) to an axially outer end (PW) of the contour (CL) of the carcass (12) is not less than 70% and not greater than 85%, and
a ratio (Y/H) of a distance (Y) in a radial direction from a bead base line (BBL) of the tire (2) to the inflection point (PV) to a distance (H) in the radial direction from the bead base line (BBL) to a point of intersection (PE) of the contour (CL) of the carcass (12) and the equator plane (EL) is not less than 15% and not greater than 22%.

3. The heavy duty tire (2) according to claim 1 or 2, wherein a ratio (HB/Y) of a distance (HB) in the radial direction from the bead base line (BBL) of the tire (2) to a bottom (PB) of the recess (50) to a distance (Y) in the radial direction from the bead base line (BBL) to the inflection point (PV) is not less than 1.8.

4. The heavy duty tire (2) according to any one of claims 1 to 3, wherein a ratio (HB/HW) of the distance (HB) in the radial direction from the bead base line (BBL) of the tire (2) to the bottom (PB) of the recess (50) to a distance (HW) in the radial direction from the bead base line (BBL) to the axially outer end (PW) of the contour (CL) of the carcass (12) is not greater than 0.9.

5. The heavy duty tire (2) according to any one of claims 1 to 4, wherein
the recess (50) includes a bottom portion (56) including the bottom (PB), an outer boundary portion (58) located radially outward of the bottom portion (56) and including an outer end (PS) of the recess (50), and an inner boundary portion (60) located radially inward of the bottom portion (56) and including an inner end (PU) of the recess (50), and
in a meridian cross-section of the tire (2),
a contour of the outer boundary portion (58) is represented by an arc that is tangent to a line representing a contour of the outer portion (52), at the outer end (PS) of the recess (50), and that has a radius (Rs) of not less than 40 mm, or a contour of the inner boundary portion (60) is represented by an arc that is tangent to a line representing a contour of the inner portion (54), at the inner end (PU) of the recess (50), and that has a radius (Ru) of not less than 40 mm.

6. The heavy duty tire (2) according to claim 5, wherein, in the meridian cross-section of the tire (2),
the contour of the outer boundary portion (58) is represented by an arc that is tangent to the line representing the contour of the outer portion (52), at the outer end (PS) of the recess (50), and that has a radius (Rs) of not less than 40 mm, and
the contour of the inner boundary portion (60) is represented by an arc that is tangent to the line representing the contour of the inner portion (54), at the inner end (PU) of the recess (50), and that has a radius (Ru) of not less than 40 mm.

7. The heavy duty tire (2) according to claim 6, wherein
a contour of the bottom portion (56) is represented by an arc that is tangent to the arc representing the outer boundary portion (58), at an outer end (MS) of the bottom portion (56), and that is tangent to the arc representing the inner boundary portion (60), at an inner end (MU) of the bottom portion (56).

8. The heavy duty tire (2) according to any one of claims 1 to 7, wherein a ratio (TN/TP) of a minimum thickness (TN) from the carcass (12) to the recess (50) to a virtual thickness (TP), from the carcass (12) to a virtual side surface (VL) obtained on the assumption that the recess (50) is not present, measured along a line segment indicating the minimum thickness (TN), is not less than 30% and not greater than 70%.

9. The heavy duty tire (2) according to any one of claims 1 to 8, wherein
the core (32) includes a core body (32m),
the core body (32m) includes a wire wound in a circumferential direction,
the core body (32m) has a bottom surface (32msb) located so as to face a seat (RS) of a rim (R) onto which the tire (2) is fitted,
in the meridian cross-section of the tire (2), a contour of the bottom surface (32msb) is represented by a straight line (LT), and
an angle (θ) formed between a tangent line (LV) that is tangent to the contour (CL) of the carcass (12) at the inflection point (PV) and the straight line (LT) representing the contour of the bottom surface (32msb) is not less than 25 degrees and not greater than 30 degrees.

10. The heavy duty tire (2) according to any one of claims 1 to 9, wherein a ratio (TA/TT) of the thickness (TA) of the apex (34) to a thickness (TT) of the tire (2) at the inflection point (PV) is not less than 42% and not greater than 50%.

11. A production method for the heavy duty tire (2) according to any one of claims 1 to 10, the production method being a method for producing a tire (2) including a pair of beads (10) and a carcass (12) extending on and between a first bead (10) and a second bead (10) out of the pair of beads (10), the production method comprising:
a step of preparing a green tire (2r) that is in an unvulcanized state of the tire (2); and
a step of pressurizing and heating the green tire (2r) in a mold (64), wherein
a ratio (WC/WR) of a clip width (WC) of the mold (64) to a rim width (WR) of a rim (R) onto which the tire (2) is fitted is not less than 1.02 and not greater than 1.17.

## Patentansprüche

1. Schwerlastreifen (2), umfassend ein Paar Wülste (10) und eine Karkasse (12), die sich auf und zwischen einem ersten Wulst (10) und einem zweiten Wulst (10) aus dem Paar Wülste (10) erstreckt, wobei
der Wulst (10) einen Kern (32) und einen Kernreiter (34) umfasst, der sich radial außen von dem Kern (32) befindet und einen inneren Kernreiter (34u) und einen äußeren Kernreiter (34s) umfasst,
die Karkasse (12) eine Karkasslage (38) mit einem Lagenkörper (38a) umfasst, der sich zwischen den Kernen (32) der Wülste (10) erstreckt,
in einem Meridianquerschnitt des Reifens (2) eine Kontur (CL) der Karkasse (12) einen nach außen gewölbten gekrümmten Abschnitt (44) und einen nach innen vertieften, umgekehrt gekrümmten Abschnitt (46) umfasst, der sich radial innen von dem gekrümmten Abschnitt (44) befindet,
der umgekehrt gekrümmte Abschnitt (46) mit dem gekrümmten Abschnitt (44) verbunden ist,
eine Grenze zwischen dem gekrümmten Abschnitt (44) und dem umgekehrt gekrümmten Abschnitt (46) ein Wendepunkt (PV) ist,
ein Teil oder eine Gesamtheit des gekrümmten Abschnitts (44) durch einen ersten Bogen dargestellt ist, der den Wendepunkt (PV) umfasst,
ein Teil oder eine Gesamtheit des umgekehrt gekrümmten Abschnitts (46) durch einen zweiten Bogen dargestellt ist, der den Wendepunkt (PV) umfasst,
der erste Bogen und der zweite Bogen an dem Wendepunkt (PV) tangential zueinander sind,
jede Seitenfläche des Reifens (2) eine Vertiefung (50), die nach innen vertieft ist, einen äußeren Abschnitt (52), der sich radial außen von der Vertiefung (50) befindet, und einen inneren Abschnitt (54) umfasst, der sich radial innen von der Vertiefung (50) befindet, und
die Vertiefung (50) sich radial außen von dem Wendepunkt (PV) befindet,
**dadurch gekennzeichnet, dass** die Karkasslage (38) eine große Anzahl von Karkasskorden (42) umfasst, die miteinander ausgerichtet sind, jeder der Karkasskorde (42) ein Stahlkord ist,
und ein Verhältnis (TU/TA) einer Dicke (TU) des inneren Kernreiters (34u) an dem Wendepunkt (PV), gemessen entlang einer Normallinie (LN), zu einer Dicke (TA) des Kernreiters (34) an dem Wendepunkt (PV), gemessen entlang der Normallinie (LN), nicht weniger als 30 % und nicht mehr als 45 % beträgt, wobei die Normallinie (LN) normal zu einer Grenzfläche zwischen dem Lagenkörper (38a) der Karkasse (12) und dem Kernreiter (34) ist und durch den in der Kontur (CL) spezifizierten Wendepunkt (PV) in einem Referenzzustand verläuft, in dem der Reifen (2) auf eine standardisierte Felge aufgezogen ist, der Innendruck des Reifens (2) auf 50 kPa eingestellt ist und keine Last auf den Reifen (2) aufgebracht ist.

2. Schwerlastreifen (2) nach Anspruch 1, wobei
ein Verhältnis (X/W) eines Abstands (X) in einer axialen Richtung von einer Äquatorebene (EL) des Reifens (2) zu dem Wendepunkt (PV) zu einem Abstand (W) in der axialen Richtung von der Äquatorebene (EL) zu einem axial äußeren Ende (PW) der Kontur (CL) der Karkasse (12) nicht weniger als 70 % und nicht mehr als 85 % beträgt, und
ein Verhältnis (Y/H) eines Abstands (Y) in einer radialen Richtung von einer Wulstbasislinie (BBL) des Reifens (2) zu dem Wendepunkt (PV) zu einem Abstand (H) in der radialen Richtung von der Wulstbasislinie (BBL) zu einem Schnittpunkt (PE) der Kontur (CL) der Karkasse (12) und der Äquatorebene (EL) nicht weniger als 15 % und nicht mehr als 22 % beträgt.

3. Schwerlastreifen (2) nach Anspruch 1 oder 2, wobei ein Verhältnis (HB/Y) eines Abstands (HB) in der radialen Richtung von der Wulstbasislinie (BBL) des Reifens (2) zu einem Boden (PB) der Vertiefung (50) zu einem Abstand (Y) in der radialen Richtung von der Wulstbasislinie (BBL) zu dem Wendepunkt (PV) nicht weniger als 1,8 beträgt.

4. Schwerlastreifen (2) nach einem der Ansprüche 1 bis 3, wobei ein Verhältnis (HB/HW) des Abstands (HB) in der radialen Richtung von der Wulstbasislinie (BBL) des Reifens (2) zu dem Boden (PB) der Vertiefung (50) zu einem Abstand (HW) in der radialen Richtung von der Wulstbasislinie (BBL) zu dem axial äußeren Ende (PW) der Kontur (CL) der Karkasse (12) nicht mehr als 0,9 beträgt.

5. Schwerlastreifen (2) nach einem der Ansprüche 1 bis 4, wobei
die Vertiefung (50) einen Bodenabschnitt (56), der den Boden (PB) umfasst, einen äußeren Grenzabschnitt (58), der sich radial außen von dem Bodenabschnitt (56) befindet und ein äußeres Ende (PS) der Vertiefung (50) umfasst, und einen inneren Grenzabschnitt (60) umfasst, der sich radial innen von dem Bodenabschnitt (56) befindet und ein inneres Ende (PU) der Vertiefung (50) umfasst, und
in einem Meridianquerschnitt des Reifens (2)
eine Kontur des äußeren Grenzabschnitts (58) durch einen Bogen dargestellt ist, der tangential zu einer Linie ist, die eine Kontur des äußeren Abschnitts (52) an dem äußeren Ende (PS) der Vertiefung (50) darstellt, und der einen Radius (Rs) von nicht weniger als 40 mm aufweist, oder eine Kontur des inneren Grenzabschnitts (60) durch einen Bogen dargestellt ist, der tangential zu einer Linie ist, die eine Kontur des inneren Abschnitts (54) an dem inneren Ende (PU) der Vertiefung (50) darstellt, und der einen Radius (Ru) von nicht weniger als 40 mm aufweist.

6. Schwerlastreifen (2) nach Anspruch 5, wobei in dem Meridianquerschnitt des Reifens (2)
die Kontur des äußeren Grenzabschnitts (58) durch einen Bogen dargestellt ist, der tangential zu der Linie ist, die die Kontur des äußeren Abschnitts (52) an dem äußeren Ende (PS) der Vertiefung (50) darstellt, und der einen Radius (Rs) von nicht weniger als 40 mm aufweist, und
die Kontur des inneren Grenzabschnitts (60) durch einen Bogen dargestellt ist, der tangential zu der Linie ist, die die Kontur des inneren Abschnitts (54) an dem inneren Ende (PU) der Vertiefung (50) darstellt, und der einen Radius (Ru) von nicht weniger als 40 mm aufweist.

7. Schwerlastreifen (2) nach Anspruch 6, wobei eine Kontur des Bodenabschnitts (56) durch einen Bogen dargestellt ist, der tangential zu dem Bogen ist, der den äußeren Grenzabschnitt (58) an einem äußeren Ende (MS) des Bodenabschnitts (56) darstellt, und der tangential zu dem Bogen ist, der den inneren Grenzabschnitt (60) an einem inneren Ende (MU) des Bodenabschnitts (56) darstellt.

8. Schwerlastreifen (2) nach einem der Ansprüche 1 bis 7, wobei ein Verhältnis (TN/TP) einer minimalen Dicke (TN) von der Karkasse (12) zu der Vertiefung (50) zu einer virtuellen Dicke (TP) von der Karkasse (12) zu einer virtuellen Seitenfläche (VL), die unter der Annahme erhalten wird, dass die Vertiefung (50) nicht vorhanden ist, gemessen entlang eines Liniensegments, das die minimale Dicke (TN) angibt, nicht weniger als 30 % und nicht mehr als 70 % beträgt.

9. Schwerlastreifen (2) nach einem der Ansprüche 1 bis 8, wobei
der Kern (32) einen Kernkörper (32m) umfasst,
der Kernkörper (32m) einen Draht umfasst, der in einer Umfangsrichtung gewickelt ist,
der Kernkörper (32m) eine Bodenfläche (32msb) aufweist, die so angeordnet ist, dass sie einem Sitz (RS) einer Felge (R) zugewandt ist, auf die der Reifen (2) aufgezogen ist,
in dem Meridianquerschnitt des Reifens (2) eine Kontur der Bodenfläche (32msb) durch eine gerade Linie (LT) dargestellt ist, und
ein Winkel (θ), der zwischen einer tangentialen Linie (LV), die tangential zu der Kontur (CL) der Karkasse (12) an dem Wendepunkt (PV) ist, und der geraden Linie (LT), die die Kontur der Bodenfläche (32msb) darstellt, gebildet ist, nicht weniger als 25 Grad und nicht mehr als 30 Grad beträgt.

10. Schwerlastreifen (2) nach einem der Ansprüche 1 bis 9, wobei ein Verhältnis (TA/TT) der Dicke (TA) des Kernreiters (34) zu einer Dicke (TT) des Reifens (2) an dem Wendepunkt (PV) nicht weniger als 42 % und nicht mehr als 50 % beträgt.

11. Herstellungsverfahren für den Schwerlastreifen (2) nach einem der Ansprüche 1 bis 10, wobei das Herstellungsverfahren ein Verfahren zum Herstellen eines Reifens (2) ist, der ein Paar Wülste (10) und eine Karkasse (12) umfasst, die sich auf und zwischen einem ersten Wulst (10) und einem zweiten Wulst (10) aus dem Paar Wülste (10) erstreckt, wobei das Herstellungsverfahren umfasst:
einen Schritt des Vorbereitens eines Rohreifens (2r), der sich in einem unvulkanisierten Zustand des Reifens (2) befindet; und
einen Schritt des Druckbeaufschlagens und Erwärmens des Rohreifens (2r) in einer Form (64), wobei
ein Verhältnis (WC/WR) einer Klemmbreite (WC) der Form (64) zu einer Felgenbreite (WR) einer Felge (R), auf die der Reifen (2) aufgezogen ist, nicht weniger als 1,02 und nicht mehr als 1,17 beträgt.

## Revendications

1. Pneumatique pour service intensif (2) comprenant une paire de talons (10) et une carcasse (12) s'étendant sur et entre un premier talon (10) et un second talon (10) parmi la paire de talons (10), dans lequel
le talon (10) inclut une âme (32) et un apex (34) situé radialement à l'extérieur de l'âme (32) et incluant un apex intérieur (34u) et un apex extérieur (34s),
la carcasse (12) inclut une nappe de carcasse (38) ayant un corps de nappe (38a) qui s'étend entre les âmes (32) des talons (10),
dans une section transversale méridienne du pneumatique (2), un contour (CL) de la carcasse (12) inclut une portion incurvée bombée vers l'extérieur (44) et une portion inversement incurvée évidée vers l'intérieur (46) située radialement à l'intérieur de la portion incurvée (44),
la portion inversement incurvée (46) est connectée à la portion incurvée (44), une frontière entre la portion incurvée (44) et la portion inversement incurvée (46) est un point d'inflexion (PV),
une partie ou une totalité de la portion incurvée (44) est représentée par un premier arc incluant le point d'inflexion (PV),
une partie ou une totalité de la portion inversement incurvée (46) est représentée par un second arc incluant le point d'inflexion (PV),
le premier arc et le second arc sont tangents l'un à l'autre au niveau du point d'inflexion (PV),
chaque surface latérale du pneumatique (2) inclut un évidement (50) évidé vers l'intérieur, une portion extérieure (52) située radialement à l'extérieur de l'évidement (50), et une portion intérieure (54) située radialement à l'intérieur de l'évidement (50), et
l'évidement (50) est situé radialement à l'extérieur du point d'inflexion (PV), **caractérisé en ce que** la nappe de carcasse (38) inclut un grand nombre de câblés de carcasse (42) alignés les uns avec les autres, chacun des câblés de carcasse (42) étant un câblé en acier,
et un rapport (TU/TA) d'une épaisseur (TU) de l'apex intérieur (34u) au niveau du point d'inflexion (PV) mesurée le long d'une ligne normale (LN) sur une épaisseur (TA) de l'apex (34) au niveau du point d'inflexion (PV) mesurée le long de la ligne normale (LN) n'est pas inférieur à 30 % et n'est pas supérieur à 45 %, la ligne normale (LN) étant normale à une interface entre le corps de nappe (38a) de la carcasse (12) et l'apex (34) et passant par le point d'inflexion (PV) spécifiée dans le contour (CL) dans un état de référence dans lequel le pneumatique (2) est monté sur une jante standardisée, la pression interne du pneumatique (2) est ajustée à 50 kPa, et aucune charge n'est appliquée sur le pneumatique (2).

2. Pneumatique pour service intensif (2) selon la revendication 1, dans lequel un rapport (X/W) d'une distance (X) dans une direction axiale depuis un plan d'équateur (EL) du pneumatique (2) jusqu'au point d'inflexion (PV) sur une distance (W) dans la direction axiale depuis le plan d'équateur (EL) jusqu'à une extrémité axialement extérieure (PW) du contour (CL) de la carcasse (12) n'est pas inférieur à 70 % et n'est pas supérieur à 85 % ; et
un rapport (Y/H) d'une distance (Y) dans une direction radiale depuis une ligne de base de talon (BBL) du pneumatique (2) jusqu'au point d'inflexion (PV) sur une distance (H) dans la direction radiale depuis la ligne de base de talon (BBL) jusqu'à un point d'intersection (PE) du contour (CL) de la carcasse (12) et le plan d'équateur (EL) n'est pas inférieur à 15 % et n'est pas supérieur à 22 %.

3. Pneumatique pour service intensif (2) selon la revendication 1 ou 2, dans lequel un rapport (HB/Y) d'une distance (HB) dans la direction radiale depuis la ligne de base de talon (BBL) du pneumatique (2) jusqu'à un fond (PB) de l'évidement (50) sur une distance (Y) dans la direction radiale depuis la ligne de base de talon (BBL) jusqu'au point d'inflexion (PV) n'est pas inférieur à 1,8.

4. Pneumatique pour service intensif (2) selon l'une quelconque des revendications 1 à 3, dans lequel un rapport (HB/HW) d'une distance (HB) dans la direction radiale depuis la ligne de base de talon (BBL) du pneumatique (2) jusqu'au fond (PB) de l'évidement (50) sur une distance (HW) dans la direction radiale depuis la ligne de base de talon (BBL) jusqu'à l'extrémité axialement extérieure (PW) du contour (CL) de la carcasse (12) n'est pas supérieur à 0,9.

5. Pneumatique pour service intensif (2) selon l'une quelconque des revendications 1 à 4, dans lequel
l'évidement (50) inclut une portion de fond (56) incluant le fond (PB), une portion de frontière extérieure (58) située radialement à l'extérieur de la portion de fond (56) et incluant une extrémité extérieure (PS) de l'évidement (50), et une portion de frontière intérieure (60) située radialement à l'intérieur de la portion de fond (56) et incluant une extrémité intérieure (PU) de l'évidement (50), et
dans une section transversale méridienne du pneumatique (2),
un contour de la portion de frontière extérieure (58) est représenté par un arc qui est tangent à une ligne représentant un contour de la portion extérieure (52), au niveau de l'extrémité extérieure (PS) de l'évidement (50), et qui a un rayon (Rs) qui n'est pas inférieur à 40 mm, ou un contour de la portion de frontière intérieure (60) est représenté par un arc qui est tangent à une ligne représentant un contour de la portion intérieure (54), au niveau de l'extrémité intérieure (PU) de l'évidement (50), et qui a un rayon (Ru) qui n'est pas inférieur à 40 mm.

6. Pneumatique pour service intensif (2) selon la revendication 5, dans lequel, dans la section transversale méridienne du pneumatique (2),
le contour de la portion de frontière extérieure (58) est représenté par un arc qui est tangent à la ligne représentant le contour de la portion extérieure (52), au niveau de l'extrémité extérieure (PS) de l'évidement (50), et qui a un rayon (Rs) qui n'est pas inférieur à 40 mm, et
le contour de la portion de frontière intérieure (60) est représenté par un arc qui est tangent à la ligne représentant le contour de la portion intérieure (54), au niveau de l'extrémité intérieure (PU) de l'évidement (50), et qui a un rayon (Ru) qui n'est pas inférieur à 40 mm.

7. Pneumatique pour service intensif (2) selon la revendication 6, dans lequel un contour de la portion de fond (56) est représenté par un arc qui est tangent à l'arc représentant la portion de frontière extérieure (58), au niveau d'une extrémité extérieure (MS) de la portion de fond (56), et qui est tangent à l'arc représentant la portion de frontière intérieure (60), au niveau d'une extrémité intérieure (MU) de la portion de fond (56).

8. Pneumatique pour service intensif (2) selon l'une quelconque des revendications 1 à 7, dans lequel un rapport (TN/TP) d'une épaisseur minimum (TN) depuis la carcasse (12) jusqu'à l'évidement (50) sur une épaisseur virtuelle (TP), depuis la carcasse (12) jusqu'à une surface latérale virtuelle (VL) obtenu en supposant que l'évidement (50) n'est pas présent, mesurée le long d'un segment de ligne indiquant l'épaisseur minimum (TN), n'est pas inférieur à 30 % et n'est pas supérieur à 70 %.

9. Pneumatique pour service intensif (2) selon l'une quelconque des revendications 1 à 8, dans lequel
l'âme (32) inclut un corps d'âme (32m),
le corps d'âme (32m) inclut un fil enroulé dans une direction circonférentielle, le corps d'âme (32m) a une surface de fond (32msb) située de manière à faire face à un siège (RS) d'une jante (R) sur laquelle le pneumatique (2) est monté,
dans la section transversale méridienne du pneumatique (2), un contour d'une surface de fond (32msb) est représenté par une ligne droite (LT), et
un angle (θ) formé entre une ligne tangente (LV) qui est tangente au contour (CL) de la carcasse (12)) au niveau du point d'inflexion (PV) et la ligne droite (LT) représentant le contour de la surface de fond (32msb) n'est pas inférieur à 25 degrés n'est pas supérieure à 30 degrés.

10. Pneumatique pour service intensif (2) selon l'une quelconque des revendications 1à 9, dans lequel un rapport (TA/TT) de l'épaisseur (TA) de l'apex (34) sur une épaisseur (TT) du pneumatique (2) au niveau du point inflexion (PV) n'est pas inférieur à 42 % et n'est pas supérieur à 50 %.

11. Procédé de production du pneumatique pour service intensif (2) selon l'une quelconque des revendications 1 à 10, le procédé de production étant un procédé de production d'un pneumatique (2) incluant une paire de talons (10) et une carcasse (12) s'étendant sur et entre un premier talon (10) et un second talon (10) parmi la paire de talons (10), le procédé de production comprenant :
une étape consistant à préparer un pneumatique cru (2r) qui est dans un état non vulcanisé du pneumatique (2) ; et
une étape consistant à pressuriser et à chauffer le pneumatique cru (2r) dans un moule (64), dans lequel
un rapport (WC/WR) d'une largeur d'agrafe (WC) du moule (64) sur une largeur de jante (WR) d'une jante (R) sur laquelle est monté le pneumatique (2) n'est pas inférieur à 1,02 et n'est pas supérieur à 1,17.
